# EUROPÄISCHE PATENTANMELDUNG

(11) **EP 1 562 013 A1**
(43) Veröffentlichungstag der Anmeldung: **10.08.2005**
(21) Anmeldenummer: 05002064.3
(22) Anmeldetag: 01.02.2005
(51) Int. Cl.: F25J 1/00, F17C 5/02, F17C 13/08, H01M 8/04

(54) **Verfahren zum Rückverflüssigen eines Gases**

(30) Priorität: 03.02.2004 DE 102004005305
(71) Anmelder: Linde Aktiengesellschaft, 65189 Wiesbaden (DE)
(72) Erfinder: Adler, Robert, 2201 Gerasdorf (AT); Siebert, Georg, 1020 Wien (AT)
(74) Vertreter: Zahn, Christoph

(57) **Zusammenfassung**

Es wird ein Verfahren zum Rückverflüssigen der in einem Speicherbehälter anfallenden Gasphase, wobei der rückzuverflüssigende Gasstrom nach der Entnahme aus dem Speicherbehälter gegen sich selbst angewärmt, verdichtet, abgekühlt und zum Zwecke der Rückverflüssigung entspannt wird, beschrieben.

Erfindungsgemäß wird lediglich ein Teilstrom (4) des aus dem Speicherbehälter entnommenen Gasstromes (1, 2) der Verdichtung (V) zugeführt.

Vorzugsweise wird der nicht der Verdichtung zugeführte Teilstrom (3) des aus dem Speicherbehälter entnommenen Gasstromes (1, 2) einem Energie umsetzenden Prozess, beispielsweise einer Brennstoffzelle, einem Stirlingmotor, einer Direktdampferzeugung, einem Dampfprozess, einem Gasturbinenprozess, und/oder einer Speicherung zugeführt bzw. unterworfen.

## Beschreibung

Die Erfindung betrifft ein Verfahren zum Rückverflüssigen der in einem Speicherbehälter anfallenden Gasphase, wobei der rückzuverflüssigende Gasstrom nach der Entnahme aus dem Speicherbehälter gegen sich selbst angewärmt, verdichtet, abgekühlt und zum Zwecke der Rückverflüssigung entspannt wird.

Gattungsgemäße Verfahren zum Rückverflüssigen kommen beispielsweise bei der Speicherung von kryogenen Gasen bzw. Medien, wie z. B. Flüssigwasserstoff, zur Anwendung. Unabhängig von der im Einzelfall gewählten Speicherbehälterkonstruktion ist es unvermeidbar, dass es aufgrund von Wärmeeinfall auf das gespeicherte Medium zu einem Verdampfen desselben kommt. Soll nun verhindert werden, dass verdampftes, gasförmiges Medium aus dem Speicherbehälter abgegeben werden muss - eine Maßnahme, die entsprechend der Druckauslegung des Speicherbehälters ab einem bestimmten Druckwert realisiert werden muss -, so kann dies nur dadurch verhindert werden, dass eine Möglichkeit zur Rückverflüssigung der entstehenden Gasphase vorgesehen wird.

Die zum Stand der Technik zählenden Rückverflüssigungsverfahren bestehen im Wesentlichen aus einem Wärmetauscher, einem Verdichter, einem Umgebungsluftkühler sowie einer Entspannungsmaschine. Kommt ein derartiges Rückverflüssigungsverfahren beispielsweise in Verbindung mit der Speicherung von flüssigem Wasserstoff zur Anwendung, so liegt bei der Entnahme des verdampften Wasserstoffs aus dem Wasserstoff-Speicherbehälter der Wasserstoff bei dem gewählten Speicherdruck und der entsprechenden Siedetemperatur vor; bei 3 bara ist dies eine Temperatur von 24 K.

Der entnommene, gasförmige Wasserstoff wird zunächst im Wärmetauscher gegen einen verdichteten Wasserstoffstrom, auf den im Folgenden noch näher eingegangen werden wird, erwärmt. Hierbei findet ein Energieaustausch zwischen dem entnommenen Wasserstoffstrom und dem vorgenannten verdichteten Hochdruckwasserstoffstrom statt. Da beide Massenströme gleich groß sind, kann nur ein Energieaustausch im Verhältnis 1:1 erfolgen; hierbei ist die für den gewählten Wärmetauscher erforderliche Temperaturdifferenz sowie die Druckabhängigkeit zu berücksichtigen. Die in dem Speicherbehälter herrschende Temperatur kann hierbei nicht erreicht werden.

Dem vorbeschriebenen Wärmetauscher nachgeschaltet ist ein Verdichter, der den angewärmten Wasserstoffstrom auf den gewünschten Prozessdruck verdichtet. Die dabei entstehende Wärme wird über einen, dem Verdichter nachgeschalteten Umgebungsluftkühler abgeführt. Nach Durchgang durch den Umgebungsluftkühler wird der verdichtete Wasserstoffstrom - dieser liegt vorzugsweise unter einem Druck von 13 bis 100 bar vor, wobei jedoch im Prinzip auch höhere Drücke realisierbar sind, - wiederum dem vorgenannten Wärmetauscher zugeführt und in diesem gegen den anzuwärmenden, aus dem Speicherbehälter entnommenen Gasstrom abgekühlt. Anschließend wird der so abgekühlte Wasserstoffstrom mittels einer Entspannungsvorrichtung - vorzugsweise einer Entspannungsturbine - auf den gewünschten Druck des Speicherbehälters entspannt und dabei (rück)verflüssigt. Die gewählte Entspannungsvorrichtung ermöglicht die Realisierung einer isentropen Entspannung, wodurch es zu einer Verflüssigung zumindest eines Teiles des verdichteten Wasserstoffstromes kommt.

Der bei der Rückverflüssigung nicht rückverflüssigte Anteil des Gasstromes wird zusammen mit dessen flüssigen Anteil wieder dem Speicherbehälter zugeführt. Da der vorbeschriebene Rückverflüssigungsprozess im Regelfall kontinuierlich betrieben wird, wird dieser nicht verflüssigte Anteil zusammen mit dem im Kopfraum des Speicherbehälters anfallenden und aus diesem abgezogenen Gasstrom erneut dem Rückverflüssigungsprozess zugeführt.

Aufgabe der vorliegenden Erfindung ist es, ein gattungsgemäßes Verfahren zum Rückverflüssigen der in einem Speicherbehälter anfallenden Gasphase anzugeben, welches die vorgenannten Nachteile vermeidet.

Zur Lösung dieser Aufgabe wird ein Verfahren vorgeschlagen, das dadurch gekennzeichnet ist, dass lediglich ein Teilstrom des aus dem Speicherbehälter entnommenen Gasstromes der Verdichtung zugeführt wird.

Im Gegensatz zu den bekannten Verfahrensweisen wird nunmehr nicht der gesamte dem Speicherbehälter entnommene Gasstrom der Verdichtung und damit letztendlich der Rückverflüssigung zugeführt, sondem lediglich ein Teilstrom dieses aus dem Speicherbehälter entnommenen Gasstromes.

Der nicht der Verdichtung zugeführte Teilstrom des aus dem Speicherbehälter entnommenen Gasstromes wird vorzugsweise einem Energie umsetzenden Prozess, beispielsweise einer Brennstoffzelle, einem Stirlingmotor, einer Direktdampferzeugung, einem Dampfprozess, einem Gasturbinenprozess, und/oder einer Speicherung zugeführt bzw. unterworfen.

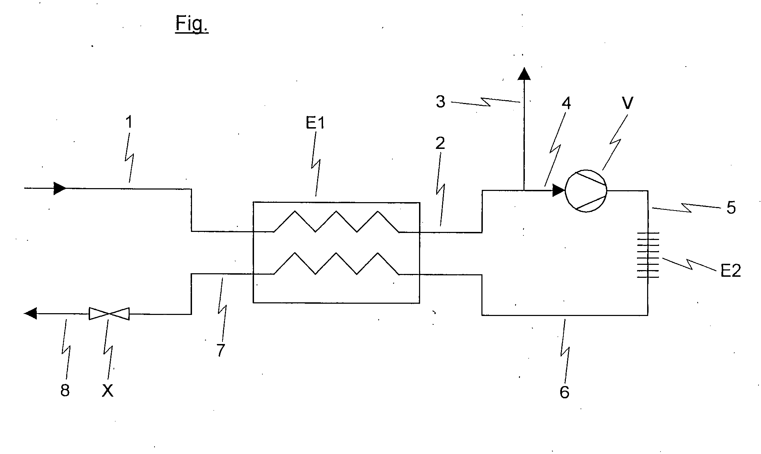

Das erfindungsgemäße Verfahren sowie weitere Ausgestaltungen desselben, die Gegenstände der abhängigen Patentansprüche darstellen, seien im Folgenden anhand des in der Figur dargestellten Ausführungsbeispieles näher erläutert.

In der Figur dargestellt ist eine Entnahmeleitung 1, über die aus einem in der Figur nicht dargestellten Speicherbehälter ein Gasstrom abgezogen und dem Wärmetauscher E1 zugeführt wird. In diesem wird der Gasstrom im Wärmetausch gegen den über Leitung 6 dem Wärmetauscher E1 zugeführten verdichteten Gasstrom - auf den im Folgenden noch näher eingegangen werden wird - angewärmt und anschließend über Leitung 2 aus dem Wärmetauscher E1 abgezogen. Nunmehr erfolgt eine Auftrennung des angewärmten Gasstromes in der Leitung 2 in einem ersten Teilstrom, der über Leitung 4 der ein- oder mehrstufigen Verdichtung V zugeführt wird, sowie in einen zweiten Teilstrom, der über Leitung 3 abgezogen und - wie bereits erwähnt- vorzugsweise einem Energie umsetzenden Prozess, beispielsweise einer Brennstoffzelle, einem Stirlingmotor, einer Direktdampferzeugung, einem Dampfprozess, einem Gasturbinenprozess, und/oder einer Speicherung zugeführt bzw. unterworfen wird. Die bei einem Energie umsetzenden Prozess gewonnene Energie kann beispielsweise zum Antreiben des Verdichters V genutzt werden. Diese Verfahrensweise macht insbesondere bei einer automotiven Anwendung des erfindungsgemäßen Verfahrens Sinn.

Der erste verdichtete Teilstrom wird nach erfolgter Verdichtung auf einen Druck zwischen 13 und 100 bar über Leitung 5 einem Luftkühler E2 zugeführt und in diesem abgekühlt. Anschließend wird der verdichtete Teilstrom des aus dem Speicherbehälter entnommene Gasstrom über Leitung 6 wiederum dem erwähnten Wärmetauscher E1 zugeführt, in diesem gegen den gesamten aus dem Speicherbehälter entnommenen Gasstrom abgekühlt und anschließend über Leitung 7 einer Drosselvorrichtung X zugeführt. In dieser erfolgt eine isenthalpe Entspannung auf den gewünschten Druck des Speicherbehälters, dem das nach der Entspannung in flüssiger Form vorliegende Gas über Leitung 8 zugeführt wird.

Im Gegensatz zu den zum Stand der Technik zählenden Rückverflüssigungsverfahren kann nunmehr auf eine Entspannungsturbine verzichtet werden. An ihre Stelle tritt eine weitaus kostengünstigere Drosselvorrichtung X, wie beispielsweise ein Entspannungsventil. Grundsätzlich ist jedoch auch weiterhin die Verwendung einer Entspannungsturbine möglich.

Nachdem erfindungsgemäß nunmehr vor dem Verdichter V ein Teilstrom 3 des angewärmten Gasstromes abgezogen und damit nicht verdichtet V und anschließend im Wärmetauscher E1 abgekühlt wird, ändert sich das Massenstromverhältnis im Wärmetauscher E1 gegenüber den zum Stand der Technik zählenden Rückverflüssigungsverfahren, bei denen das Massenstromverhältnis im Wärmetauscher E1 eins beträgt. Somit kann spezifisch mehr Energie von dem verdichteten Gasstrom - der einen kleineren Massenstrom aufweist - an den aus dem Speicherbehälter abgezogenen Wasserstoffstrom - der einen größeren Massenstrom aufweist - übertragen werden. Die "Grenze" bei diesem Wärmeaustausch ist von dem gewählten Wärmetauscher und der Eintrittstemperatur des aus dem Speicherbehälter abgezogenen Gasstromes abhängig. Das Verhältnis kann nunmehr jedoch über die Entnahme eines Teiles des Gasstromes vor der Verdichtung V beeinflusst werden; je größer der nicht der Verdichtung V zugeführte Gasstrom 3 ist, um so größer ist das Massenstromverhältnis am Wärmetauscher E1.

Bei dem erfindungsgemäßen Verfahren zum Rückverflüssigen können die selben Verdichter und Umgebungsluftkühler, die bei den zum Stand der Technik zählenden Verfahren verwendet werden, genutzt werden. Bei ansonsten identischen Randbedingungen verringert sich im Falle des erfindungsgemäßen Verfahrens der Leistungsbedarf des Verdichters um den fehlenden Massenstrom des vor der Verdichtung entnommenen Teilstromes.

Während bei den zum Stand der Technik zählenden Rückverflüssigungsverfahren eine isenthalpe Entspannung, die die Gewinnung eines ausreichend großen Flüssiganteiles ermöglicht, nicht realisierbar ist, ist dies bei dem erfindungsgemäßen Verfahren zum Rückverflüssigen eines Gasstromes nunmehr möglich.

Das erfindungsgemäße Verfahren ermöglicht daher eine Steigerung des Gesamtwirkungsgrades, die Gewinnung eines größeren Flüssiganteiles nach der Drosselung bzw. Entspannung sowie die Möglichkeit der isenthalpen Entspannung. Es erfordert ferner, um wirtschaftlich zu sein, nicht zwangsläufig große Massenströmen. Darüber hinaus wird der konstruktive Aufwand reduziert, da die bisher erforderlichen Entspannungsmaschinen nunmehr entfallen können.

Insbesondere im automotiven Bereich kommen (Flüssigwasserstoff-)Speicherbehälter, die ein vergleichsweise kleines Speichervolumen besitzen, zur Anwendung; aus diesen vergleichsweise kleinen Speichervolumina resultieren relativ geringe Abdampfverluste und folglich relative geringe Massenströme. Für die Rückverflüssigung derartig geringer Massenströme sind konventionelle Rückverflüssigungsverfahren nicht geeignet.

Das erfindungsgemäße Verfahren eignet sich daher insbesondere zur Anwendung im automotiven Bereich, da es zum Einen auch im Falle geringer Massenströme effektiv arbeitet und zum Anderen ein deutlich geringeres Gesamtgewicht als konventionelle Verfahren aufweist. Diese Gewichtsreduzierung resultiert aus dem Entfall der bisher erforderlichen Entspannungsmaschine sowie der Tatsache, dass aufgrund der mit der erfindungsgemäßen Verfahrensweise erzielten Steigerung des Wirkungsgrades ein geringerer Massenstrom im Kreis geführt werden muss, woraus eine Verringerung der Baugrößen der vorbeschriebenen Bestandteile, wie Verdichter, Wärmetauscher, etc., resultiert.

Bei Wasserstoff-betriebenen Fahrzeugen stellt sich bisher das Problem, dass aufgrund der nicht zu vermeidenden Abdampfverluste aus dem Flüssigwasserstoff-Speicherbehälter, die Standzeiten derartiger Fahrzeuge gegenwärtig auf maximal 2 Wochen begrenzt sind. Bei einer Realisierung des erfindungsgemäßen Verfahrens im automotiven Bereich können wesentlich längere Standzeiten erreicht werden, insbesondere dann, wenn der vor dem Verdichter abgezogene Gasstrom bspw. einer Brennstoffzelle zugeführt und die in der Brennstoffzelle gewonnene Energie für den Antrieb des Verdichters verwendet wird.

Daneben kann das erfindungsgemäße Verfahren selbstverständlich auch bei allen anderen bekannten Anwendungen - wie bspw. bei (Flüssigwasserstoff-)Speicherbehältern an Wasserstofftankstellen - in vorteilhafter Weise realisiert werden.

## Patentansprüche

1. Verfahren zum Rückverflüssigen der in einem Speicherbehälter anfallenden Gasphase, wobei der rückzuverflüssigende Gasstrom nach der Entnahme aus dem Speicherbehälter gegen sich selbst angewärmt, verdichtet, abgekühlt und zum Zwecke der Rückverflüssigung entspannt wird, **dadurch gekennzeichnet, dass** lediglich ein Teilstrom (4) des aus dem Speicherbehälter entnommenen Gasstromes (1, 2) der Verdichtung (V) zugeführt wird.

2. Verfahren nach Anspruch 1, **dadurch gekennzeichnet, dass** der nicht der Verdichtung zugeführte Teilstrom (3) des aus dem Speicherbehälter entnommenen Gasstromes (1, 2) einem Energie umsetzenden Prozess, beispielsweise einer Brennstoffzelle, einem Stirlingmotor, einer Direktdampferzeugung, einem Dampfprozess, einem Gasturbinenprozess, und/oder einer Speicherung zugeführt bzw. unterworfen wird.

3. Verfahren nach Anspruch 1 oder 2, **dadurch gekennzeichnet, dass** der aus dem Speicherbehälter entnommene Gasstrom (1) gegen den verdichteten Teilstrom (5, 6) des entnommenen Gasstromes (1, 2) angewärmt wird.

4. Verfahren nach Anspruch 2 oder 3, **dadurch gekennzeichnet, dass** die in dem Energie umsetzenden Prozess gewonnene Energie zum Antreiben des für die Verdichtung des aus dem Speicherbehälter entnommenen Gasstromes verwendet wird.

5. Verfahren nach einem der vorhergehenden Ansprüche 1 bis 4, **dadurch gekennzeichnet, dass** der rückzuverflüssigende Gasstrom Wasserstoff ist.
